# EUROPÄISCHE PATENTSCHRIFT

(11) **EP 3 902 716 B1**
(45) Veröffentlichungstag und Bekanntmachung des Hinweises auf die Patenterteilung: **16.08.2023**
(21) Anmeldenummer: 19832367.7
(22) Anmeldetag: 19.12.2019
(51) Int. Cl.: B60S 1/38, B60S 1/52

(54) **WISCHBLATT**
WIPER BLADE
BALAI D'ESSUIE-GLACE

(30) Priorität: 27.12.2018 DE 102018251717
(43) Veröffentlichungstag der Anmeldung: 03.11.2021
(73) Patentinhaber: Robert Bosch GmbH, 70442 Stuttgart (DE)
(72) Erfinder: TERENTIC, Andrija, 11 000 Belgrade (RS); RAPP, Harald, 77815 Buehl (DE)
(86) Internationale Anmeldenummer: PCT/EP2019/086357
(87) Internationale Veröffentlichungsnummer: WO 2020/136083

(56) Entgegenhaltungen:
- DE-A1-102013 215 196
- US-A- 5 819 360

## Beschreibung

### Stand der Technik

Die Erfindung betrifft ein Wischblatt nach der Gattung des unabhängigen Anspruchs.

Es sind Scheibenwischervorrichtungen bekannt, bei denen aus einem Behälter für Reinigungsfluid des Fahrzeugs ein Sprühstrahl bzw. eine Düse hierfür an einem Wischarm oder an dem Wischblatt angeordnet wird. Aufgrund der notwendigen Fluidzuleitung kann es dabei zu einem Verlust an Reinigungsfluid kommen, wenn die befüllte Fluidzuleitung nach dem Waschvorgang beispielsweise aufgrund der Fliehkräfte des sich bewegenden Wischblattes, aber auch durch Schwerkraft sich langsam entleert und über die Düsenöffnungen leerläuft. Soll nachfolgend wieder ein Waschvorgang eingeleitet werden, muss zunächst die Fluidzuleitung durch die Pumpe wieder befüllt werden. Dies führt zu einer Verzögerung bis der Waschvorgang einsetzt und einer Ansprechzeit.

Aus der DE 10 2006 050 721 B4 ist ein Wischerblatt bekannt, das an einem Wischerarm mit einer Zuleitung für Waschflüssigkeit anbringbar ist, wobei das Wischerblatt einen Wischgummi, einen Hebelarm, der an dem Wischerarm angekoppelt ist und den Wischgummi hält, eine Abdeckung mit einer dem Wischgummi zugewandten, einen Teil des Hebelarms aufnehmenden Öffnung, und einen Düsenmechanismus umfasst, wobei der Düsenmechanismus ein mit der Zuleitung verbundenes Anschlussstück, einen Düsenabschnitt, der Waschflüssigkeit empfängt, die von der Zuleitung unter Druck zugeführt wurde und das Anschlussstück durchlief, und die Waschflüssigkeit zu der zu wischenden Fläche zuführt, sowie ein Ventil aufweist, wobei das Ventil einen Ventilkörper und ein Druckelement umfasst, welches den Ventilkörper in Schließrichtung zum Verschließen des Ventils drängt und das, wenn die Waschflüssigkeit unter Druck zugeführt wird, zulässt, dass die Waschflüssigkeit von dem Anschlussstück zu dem Düsenabschnitt strömt, und wobei, wenn das Druckelement den Ventilkörper in Schließrichtung drängt und dabei die Zuführung der Waschflüssigkeit unterbrochen wird, das Ventil die Strömung der Waschflüssigkeit von dem Anschlussstück zu dem Düsenabschnitt blockiert.

Aus der gattungsgemäßen DE 10 2013 209 196 ist eine Wischvorrichtung mit einem Wischarm und einem Wischblatt bekannt, das zumindest einen Wischblattadapter zur Kopplung mit dem Wischarm aufweist, wobei zumindest eine Ventileinheit in zumindest einer Umgebung des zumindest einen Wischblattadapters angeordnet ist. Die Ventileinheit kann ein Rückschlagventil sein, aber auch durch eine Steuereinheit angesteuert werden.

### OFFENBARUNG DER ERFINDUNG

Das Wischblatt mit den Merkmalen des Hauptanspruchs 1 hat den Vorteil, dass die Ventileinheit kurz vor den Düsenelementen in dem Leitungsverlauf für das Reinigungsfluid bzw. Waschwasser liegt. Die Anordnung in der Endkappe oder beiden Endkappen ist dabei vorteilhaft, da hier entsprechend Platz zur Verfügung steht. Insbesondere ist es vorteilhaft, wenn die Düsenelemente integriert in die als Spritzgussteil ausgeführten Endkappen sind und vom Rand des Wischblattes her ein Reinigungsstrahl auf die Scheibe gerichtet wird. In diesem Fall liegen die Ventileinheiten dann unmittelbar vor den Düsenelementen. Es wird vermieden, dass sich eine Fluidleitung entleert. Wenn ein Waschvorgang eingeleitet wird, erzeugt die Pumpe schnell in der bereits gefüllten Fluidleitung einen Druck, der das Ventil öffnet und mit einer praktisch zu vernachlässigenden Ansprechzeit setzt der Waschvorgang ein. Eine sehr geringe Ansprechzeit ist auch für die Sicherheit des Betriebes eines Fahrzeugs vorteilhaft.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft bestehen die Düsenelemente aus Düsen in der Endkappe. Da die Endkappen im Regelfall als Spritzgussteil hergestellt werden, kann eine Düse gut integriert werden. Die Endkappen dienen weiterhin dazu, ein eventuell mehrteilig aufgebautes Tragelement zu verbinden, die offenen Enden des Tragelements zu schützen bzw. eine gefällige Gestaltung zu erreichen.

Erfindungsgemäß sind an beiden Enden des Wischblattes Endkappen mit einer Ventileinheit angeordnet.

Vorteilhaft kann die Ventileinheit aus einem federbelasteten Rückschlagventil oder einem Membranventil bestehen. Erforderlich ist immer ein Ventil, das die Leitung verschließt und sobald ein bestimmter Überdruck erreicht wird öffnet, vergleichbar einem Fahrradventil.

Es kann an dem Tragelement eine Spoilerleiste befestigt sein, deren äußeres Ende durch die Endkappe überdeckt wird. Durch die Spoilerleiste wird ein Abheben des Wischblatt bei hohen Fahrgeschwindigkeiten verhindert. Bei Flachbalkenscheibenwischern oder gelenklosen Scheibenwischern ist im Regelfall über die gesamte Länge des Wischblattes eine Spoilerleiste vorgesehen, die sich somit ausgehend von dem Adapter für den Anschluss des Wischarms beidseits jeweils bis zu einer Endkappe erstreckt.

Vorteilhaft ist in die Spoilerleiste die Fluidleitung integriert.

In einer weiteren Ausgestaltung ist beidseitig im Rand der Spoilerleiste eine Fluidleitung integriert.

Vorteilhaft weist die Endkappe eine integrierte Fluidleitung zu den Düsenelementen auf und ist die Ventileinheit zwischen die Verbindung der Fluidleitung der Endkappe und der Fluidleitung in der Spoilerleiste gesteckt.

### Beschreibung der Zeichnungen

Ausführungsbeispiele sind in den Zeichnungen dargestellt und in der nachfolgenden Beschreibung näher erläutert. Es zeigen:
- Fig. 1: schematisch ein Wischblatt montiert an einem Wischarm,
- Fig. 2: ein Detail eines Adapters an einem Wischblatt,
- Fig. 3: ein Adapterunterteil,
- Fig. 4: eine Endkappe abgesetzt zu dem Wischblatt,
- Fig. 5: die Endkappe in einer weiteren Ansicht und
- Fig. 6: das Ende eines Wischblattes mit Endkappe,

### Beschreibung der Ausführungsbeispiele

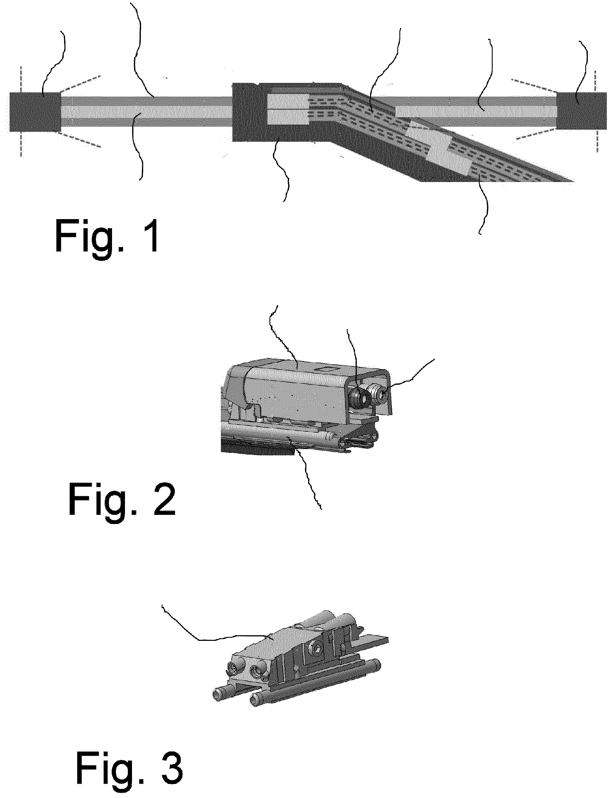

Die Fig. 1 zeigt ein Wischblatt 1 mit jeweils einer Endkappe 2 an jedem Ende des Wischblattes 1.das Wischblatt 1 ist an einem Wischarm 3 montiert durch den zwei Fluidleitunge 4 führen, die mit Fluidleitungen 5 in dem Wischblatt 1 verbunden sind. Die Fluidleitung in 5 in dem Wischblatt 1 leitet das Reinigungsfluid zu den Endkappen 2.

Die Fig. 2 zeigt ein Detail eines Adapters 6 an einem Wischblatt 1. In einem Adapteroberteil 7, das zur Verbindung mit dem Wischarm 3 dient, sind zwei Anschlüsse 8 für die Fluidleitungen 4 des Wischarms 3 angeordnet.

Die Fig. 3 zeigt ein Adapterunterteil 9 des Adapters 6 mit fest an geformten Fluidleitungen 10, mit denen das Reinigungsfluid in hier nicht dargestellte Fluidleitungen integriert in eine Spoilerleiste geleitet wird.

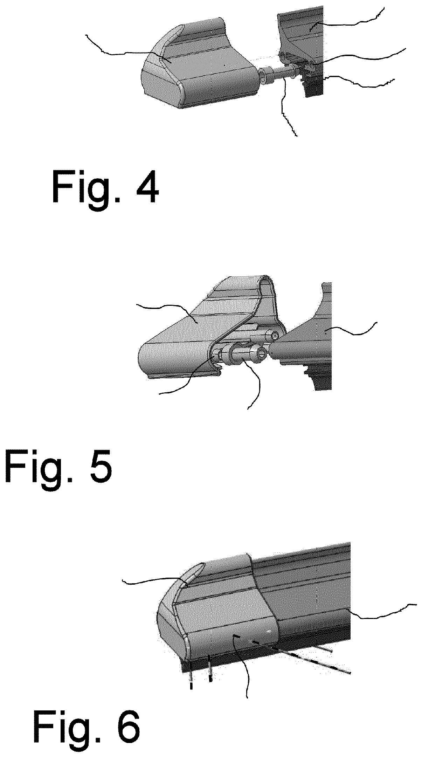

Die Fig. 4 zeigt eine Endkappe 2 abgesetzt zu dem Wischblatt 1. Zwischen der Endkappe 2 und einer in eine Spoilerleiste 11 integrierten Fluidleitung 5 ist eine Ventileinheit 12 angeordnet.

Die Fig. 5 zeigt die Endkappe 2 in einer weiteren Ansicht. In der Endkappe 2 befindet sich ein fest integrierter Teil einer Fluidleitung 13 und die Ventileinheit 12 ist zwischen die Verbindung dieser Fluidleitung 13 und der Fluidleitung 5 in der Spoilerleiste 11 gesteckt.

Die Fig. 6 zeigt das Ende eines Wischblattes 1 mit Endkappe2, in die Düsen 15 als Düsenelemente 14 integriert sind. Wie durch die gestrichelten Linien angedeutet, kann durch diese ein Reinigungsfluid auf eine Windschutzscheibe aufgebracht werden.

## Patentansprüche

1. Wischblatt mit einer Wischleiste, einem Tragelement, das einen Anpressdruck auf die Windschutzscheibe über die Länge des Wischblattes (1) verteilt, einem Adapter (6) zur Verbindung mit einem Wischarm (3), mindestens einer Endkappe (2) an einem oder beiden Enden des Wischblattes (1), die mindestens das Tragelement überdecken, und Düsenelementen (14) für die Aufbringung eines Reinigungsfluids auf die Scheibe sowie Fluidleitungen (5,10,13) zu den Düsenelementen (14) die über den Adapter (6) mit Fluidzuleitungen (4) des Wischarms (3) verbindbar sind,
**dadurch gekennzeichnet,**
**dass** eine Fluidzuleitung (5) von dem Adapter (6) zu der mindestens einen Endkappe (2) führt und vor oder in der Endkappe (2) eine Ventileinheit (12) mit der Fluidzuleitung (5) verbunden ist sowie die Düsenelemente (14) nach der Ventileinheit (12) angeschlossen sind, wobei an beiden Enden des Wischblattes (1) Endkappen (2) mit einer Ventileinheit (12) angeordnet sind.

2. Wischblatt nach Anspruch 1,
**dadurch gekennzeichnet,**
**dass** die Düsenelemente (14) aus Düsen (15) in der Endkappe (2) bestehen.

3. Wischblatt nach einem der vorhergehenden Ansprüche,
**dadurch gekennzeichnet,**
**dass** die Ventileinheit (12) aus einem federbelasteten Rückschlagventil oder einem Membranventil besteht.

4. Wischblatt einem der vorhergehenden Ansprüche,
**dadurch gekennzeichnet,**
**dass** an dem Tragelement eine Spoilerleiste (11) befestigt ist, deren äußeres Ende durch die Endkappe (2) überdeckt wird.

5. Wischblatt nach Anspruch 4,
**dadurch gekennzeichnet,**
**dass** in die Spoilerleiste (11) die Fluidleitung (5) integriert ist.

6. Wischblatt nach Anspruch 5,
**dadurch gekennzeichnet,**
**dass** beidseitig im Rand der Spoilerleiste (11) eine Fluidleitung (5) integriert ist.

7. Wischblatt nach einem der Ansprüche 4 bis 6,
**dadurch gekennzeichnet,**
**dass** die Endkappe (2) eine integrierte Fluidleitung (13) zu den Düsenelementen (14) aufweist und die Ventileinheit (14) zwischen die Verbindung der Fluidleitung (13) der Endkappe (2) und der Fluidleitung (5) in der Spoilerleiste (11) gesteckt ist.

## Claims

1. Wiper blade with a wiper strip, a supporting element, which distributes a contact pressure onto the windscreen over the length of the wiper blade (1), an adapter (6) for connection to a wiper arm (3), at least one end cap (2) at one or both ends of the wiper blade (1), said end caps covering at least the supporting element, and nozzle elements (14) for applying a cleaning fluid to the pane, and fluid lines (5, 10, 13) to the nozzle elements (14), which fluid lines are connectable to fluid feed lines (4) of the wiper arm (3) via the adapter (6), **characterized**
**in that** a fluid feed line (5) leads from the adapter (6) to the at least one end cap (2), and a valve unit (12) is connected to the fluid feed line (5) in front of or in the end cap (2), and the nozzle elements (14) are connected downstream of the valve unit (12), wherein end caps (2) with a valve unit (12) are arranged at both ends of the wiper blade (1) .

2. Wiper blade according to Claim 1,
**characterized**
**in that** the nozzle elements (14) consist of nozzles (15) in the end cap (2).

3. Wiper blade according to either of the preceding claims,
**characterized**
**in that** the valve unit (12) consists of a springloaded nonreturn valve or of a membrane valve.

4. Wiper blade according to one of the preceding claims,
**characterized**
**in that** a spoiler strip (11), the outer end of which is covered by the end cap (2), is fastened to the supporting element.

5. Wiper blade according to Claim 4,
**characterized**
**in that** the fluid line (5) is integrated in the spoiler strip (11).

6. Wiper blade according to Claim 5,
**characterized**
**in that** a fluid line (5) is integrated on both sides in the edge of the spoiler strip (11).

7. Wiper blade according to one of Claims 4 to 6,
**characterized**
**in that** the end cap (2) has an integrated fluid line (13) to the nozzle elements (14) and the valve unit (14) is inserted between the connection of the fluid line (13) in the end cap (2) and the fluid line (5) in the spoiler strip (11).

## Revendications

1. Balai d'essuie-glace comprenant une lame d'essuie-glace, un élément de support qui répartit une pression de contact sur le pare-brise sur la longueur du balai d'essuie-glace (1), un adaptateur (6) destiné à être relié à un bras d'essuie-glace (3), au moins un capuchon d'extrémité (2) disposé à une extrémité ou aux deux extrémités du balai d'essuie-glace (1) et recouvrant au moins l'élément de support, et des éléments formant buses (14) destinés à appliquer un liquide de nettoyage sur le pare-brise, et des conduites de fluide (5, 10, 13) allant aux éléments formant buses (14) et pouvant être reliées par le biais de l'adaptateur (6) à des conduites d'alimentation en fluide (4) du bras d'essuie-glace (3),
**caractérisé en ce que**
une conduite d'alimentation en fluide (5) va de l'adaptateur (6) à l'au moins un capuchon d'extrémité (2) et, avant ou dans le capuchon d'extrémité (2), une unité de soupape (12) est reliée à la conduite d'alimentation en fluide (5) et les éléments formant buses (14) sont raccordés après l'unité de soupape (12), des capuchons d'extrémité (2) pourvus d'une unité de soupape (12) étant disposés aux deux extrémités du balai d'essuie-glace (1).

2. Balai d'essuie-glace selon la revendication 1,
**caractérisé en ce que**
les éléments formant buses (14) comprennent des buses (15) dans le capuchon d'extrémité (2).

3. Balai d'essuie-glace selon l'une des revendications précédentes,
**caractérisé en ce que**
l'unité de soupape (12) comprend un clapet anti-retour contraint par ressort ou une soupape à membrane.

4. Balai d'essuie-glace selon l'une des revendications précédentes,
**caractérisé en ce que**
une bande déflectrice (11), dont l'extrémité extérieure est recouverte par le capuchon d'extrémité (2), est attachée à l'élément de support.

5. Balai d'essuie-glace selon la revendication 4,
**caractérisé en ce que**
la conduite de fluide (5) est intégrée dans la bande déflectrice (11).

6. Balai d'essuie-glace selon la revendication 5,
**caractérisé en ce que**
une conduite de fluide (5) est intégrée des deux côtés dans le bord de la bande déflectrice (11).

7. Balai d'essuie-glace selon l'une des revendications 4 à 6,
**caractérisé en ce que**
le capuchon d'extrémité (2) comporte une conduite de fluide intégrée (13) allant aux éléments formant buses (14) et l'unité de soupape (14) est placée entre la liaison de la conduite de fluide (13) du capuchon d'extrémité (2) et la conduite de fluide (5) dans la bande déflectrice (11).
